# FASCICULE DE BREVET EUROPEEN

(11) **EP 1 800 998 B1**
(45) Date de publication et mention de la délivrance du brevet: **13.01.2010**
(21) Numéro de dépôt: 06356153.4
(22) Date de dépôt: 22.12.2006
(51) Int. Cl.: B62D 25/08

(54) **Ensemble d'auvent**
Wasserkasten
Cowl box

(30) Priorité: 23.12.2005 FR 0513284
(43) Date de publication de la demande: 27.06.2007
(73) Titulaire: Mécaplast, 98014 Monaco (MC)
(72) Inventeur: Chenaud, David, 01100 Bellignat (FR); Roposte, Dominique, 01460 Geovreissiat (FR); Vincent, Stéphane, 01250 Corveissiat (FR)
(74) Mandataire: Delorme, Nicolas

(56) Documents cités:
- EP-A- 1 564 114
- DE-A1- 10 323 725
- FR-A- 2 623 455
- FR-A- 2 847 205

## Description

La présente invention concerne un ensemble d'auvent destiné à prendre place à la jonction entre un capot recouvrant le compartiment moteur et un pare-brise d'un véhicule automobile.

Dans l'architecture classique d'un véhicule automobile, la zone comprise entre le capot et le pare brise peut être généralement occupée par un ensemble d'auvent.

L'ensemble d'auvent revêt une importance particulière dans la prise en compte d'une collision entre un véhicule et un piéton.

En effet, la dynamique d'une telle collision fait que les jambes du piéton entrent en contact avec le pare-choc du véhicule, le fémur entre en contact avec le bord avant du capot et la tête du piéton percute la zone de jonction entre le capot et la partie inférieure du pare-brise, c'est-à-dire précisément l'ensemble d'auvent.

On voit, donc, que la prise en compte de l'ensemble d'auvent dans le traitement d'un choc entre un véhicule et un piéton est essentiel pour ce choc soit le moins traumatique possible pour le piéton.

Le document DE 103 23 725 A1 décrit un ensemble d'auvent pour un véhicule automobile ayant une partie moteur, protégée par un capot, et une partie d'habitacle protégée notamment par un pare-brise, l'ensemble d'auvent comprenant une grille d'auvent venant en appui contre un support. Ladite ensemble présente des caractéristiques adaptées à l'absorption d'une énergie élevée.

Le document EP-A-1564114 décrit un ensemble d'auvent pour un véhicule automobile ayant une partie moteur, protégée par un capot, et une partie d'habitacle protégée notamment par un pare-brise, comprenant une grille d'auvent venant en appui présentant une bande transversale frangible pouvant se casser lors d'un impact excédant une force prédéterminée sur la grille d'auvent pour absorber une partie de l'énergie de l'impact.

On connaît, par le document FR 2 847 205, une boîte à eau qui prend en compte un impact avec un piéton. Dans ce cas, la boîte à eau s'étend transversalement entre les ailes d'un véhicule et présente des zones de rupture qui séparent une partie centrale de la boîte à eau et des platines assurant la fixation de la boîte à eau sur des ailes du véhicule.

En cas de choc, les zones de rupture se cassent en absorbant une partie de l'énergie du choc.

Cette disposition est satisfaisante pour la prise en compte d'un choc avec piéton mais est essentiellement adaptée à des véhicules ayant une boîte à eau qui s'étend transversalement sur toute la largeur du véhicule.

Or, certains véhicules ne présentent pas un telle boite à eau. En raison de contrainte architecturale, certains véhicules sont en effet pourvus d'un ensemble d'auvent intégrant une cloison qui peut supporter une grille d'auvent et venir en avant d'une boite à eau. La gestion d'un choc avec un piéton telle qu'elle est proposée par le document FR 2 847 205 n'est alors pas adaptée à ce type de véhicule.

Dans cette problématique, un but de l'invention est de proposer un ensemble d'auvent présentant un comportement limitant un traumatisme subi par un piéton en cas de choc avec un véhicule.

L'invention a essentiellement pour objet un ensemble d'auvent pour un véhicule automobile ayant une partie moteur, protégée par un capot, et une partie d'habitacle, protégée notamment par un pare-brise, pouvant être positionné entre le bord transversal arrière du capot et le bord transversal avant du pare-brise. L'ensemble d'auvent comprend une grille d'auvent qui vient en appui contre un support ; ce support présente une bande frangible transversale pouvant se casser lors d'un impact excédant une force prédéterminée sur la grille d'auvent pour absorber une partie de l'énergie de l'impact; et la bande frangible présente plusieurs pontets alternant avec des fenêtres obturées par un voile de matière plastique souple.

L'invention fournit ainsi un ensemble d'auvent qui possède une zone frangible sur toute sa largeur si bien qu'un impact en un point quelconque de cet ensemble peut être amorti par une rupture de cette zone frangible. Ceci a pour effet d'atténuer un impact entre, par exemple, la tête d'un piéton et cet ensemble d'auvent en absorbant une partie de l'énergie de l'impact. L'effet pour le piéton est une diminution très sensible du traumatisme qu'il pourrait subir.

Cette disposition s'avère tout à fait avantageuse pour créer une zone qui peut se casser lors d'un impact tout en préservant l'étanchéité entre, d'une part, la compartiment moteur et, d'autre part, l'habitacle. Cette étanchéité est tout à fait essentielle. Il importe, en effet, d'empêcher que des gaz en provenance du compartiment moteur migrent vers l'ensemble d'auvent puisque l'air frais alimentant l'habitacle est prélevé précisément au niveau de l'ensemble d'auvent.

De préférence, au moins l'un des pontets peut présenter une ligne de restriction de matière.

Selon une caractéristique avantageuse de l'invention, le support présente une partie formant tablier surmontée d'une poutre transversale contre laquelle le capot vient en appui lorsqu'il est en position fermée.

Il est alors envisagé que la bande frangible s'étend transversalement de manière adjacente à la poutre transversale.

Selon une disposition de l'invention, la poutre transversale présente une section transversale en C.

En outre, la poutre transversale est pourvue d'un réseau de nervures orientées dans la direction d'appui du capot.

Un profilé d'étanchéité qui est mis sous contrainte lorsque le capot est en position fermée peut être interposé entre la poutre transversale et le capot.

On peut envisager que la poutre transversale présente une nervure sur laquelle est chaussé le profilé d'étanchéité.

Il peut également être envisagé que le capot embarque sur sa face interne le profilé d'étanchéité.

Selon une disposition avantageuse de l'invention, le support présente des moyens de fixation sur le véhicule à chacune de ses extrémités autorisant un degré de liberté dans une direction transversale.

Les moyens de fixation peuvent alors consister en une lumière oblongue pratiquée à chaque extrémité de la poutre transversale dans laquelle peut être engagée un moyen de fixation tel qu'un rivet ou un boulon.

De façon pratique, le voile de matière souple peut être obtenu par co moulage avec le support.

Il est également envisagé que le joint d'étanchéité (10) puisse être co moulé avec le voile de matière souple.

Pour sa bonne compréhension, l'invention est décrite en référence au dessin ci annexé représentant, à titre d'exemple non limitatif, une forme de réalisation d'un ensemble d'auvent selon celle-ci.

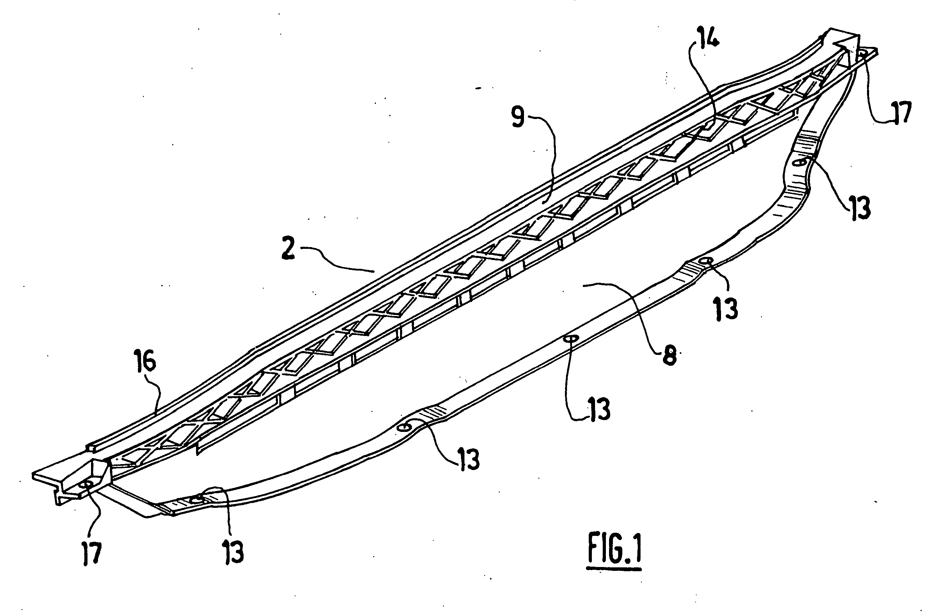

Figures 1 et 2 représentent en perspective, selon deux angles différents, un support entrant dans la définition de l'ensemble d'auvent selon l'invention,

Figures 3 et 4 représentent en coupe, respectivement selon III-III et IV-IV de figure 2, l'ensemble d'auvent.

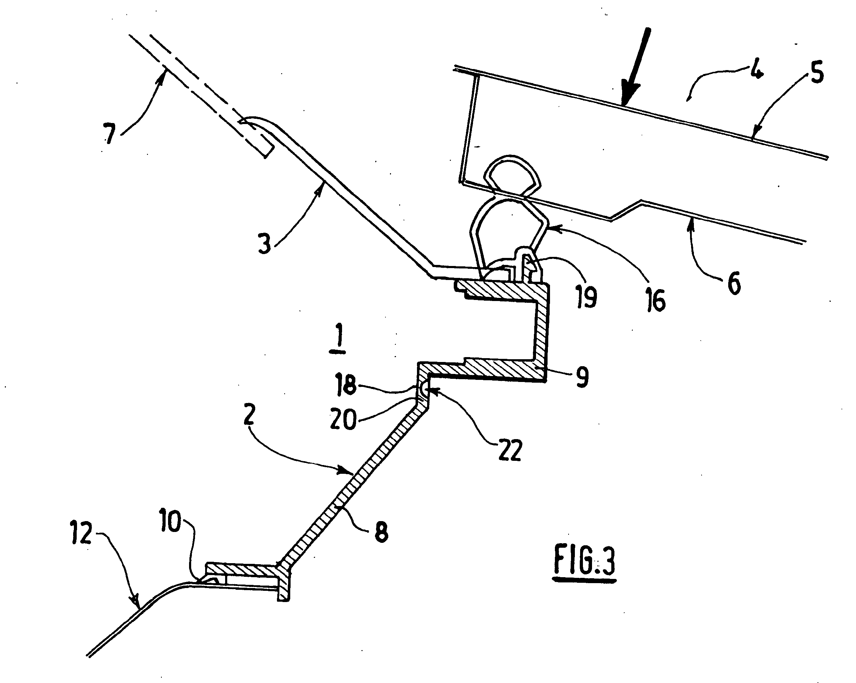

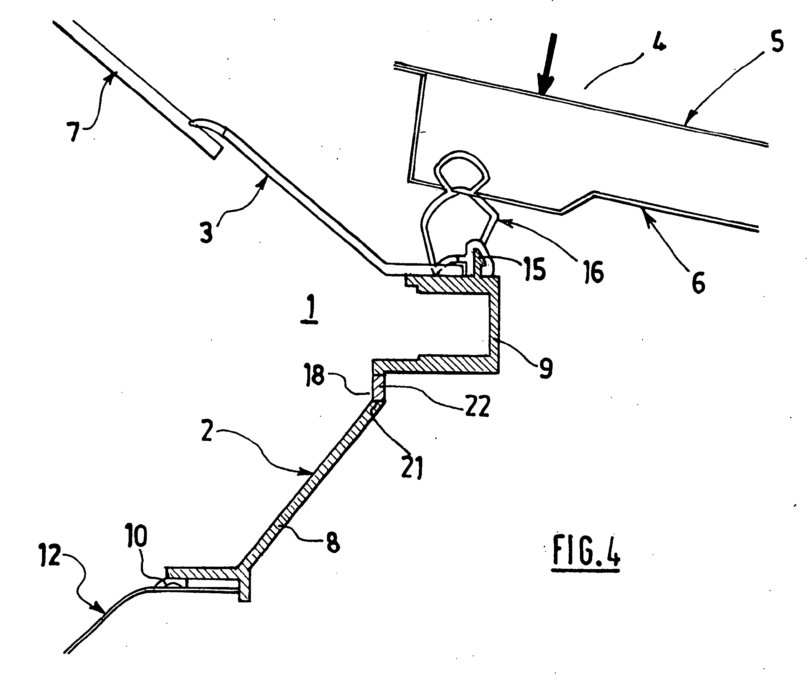

Comme cela apparaît sur les figures 3 et 4, l'ensemble d'auvent 1 selon l'invention est constitué essentiellement d'un support 2 et d'une grille d'auvent 3.

Toujours en se référant aux figures 3 et 4, on peut voir que l'ensemble d'auvent 1 prend place dans la zone d'un véhicule comprise entre le bord arrière d'un capot 4 qui généralement recouvre un moteur et le bord inférieur d'un pare brise 7. Sur les figures, le capot 4 présente un tôle extérieure 5 et une doublure intérieure 6.

Cette zone est, comme cela a été expliqué, critique dans la prise en compte d'un choc avec un piéton.

Dans l'ensemble d'auvent 1 selon l'invention, le support 2 présente une partie formant tablier 8 surmontée d'une poutre transversale 9.

La partie formant tablier 8 est une paroi en matière plastique qui a comme fonction de séparer le compartiment moteur de l'habitacle.

On peut préciser que la séparation entre le compartiment moteur et l'habitacle du véhicule est assurée par le support 2 uniquement dans la zone d'auvent. Le support 2 vient en prolongement d'une tôle 12 qui forme la cloison dite cloison pare feu de séparation du compartiment moteur et de l'habitacle.

Dans l'exemple représenté, la partie formant tablier 8 est pourvue à sa périphérie de plusieurs ouvertures 13 qui peuvent recevoir des moyens de fixation tels que, par exemple, rivets, vis ou goujon permettant la fixation de l'ensemble d'auvent 1 sur un véhicule.

La partie formant tablier 8 peut, de plus, être équipée à sa périphérie d'un joint d'étanchéité 10 rapporté ou comoulé.

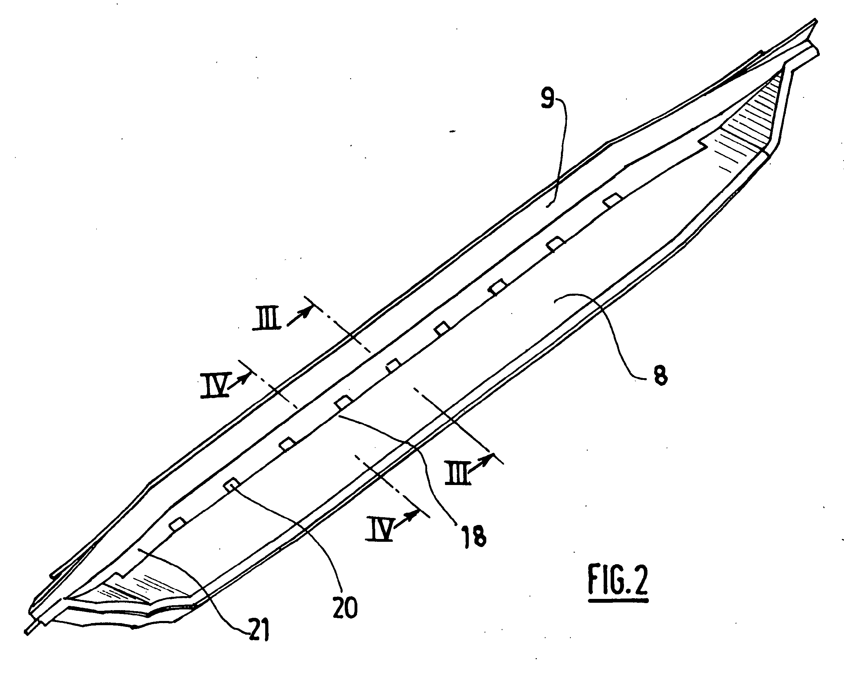

La poutre transversale 9, qui est venue de moulage avec la partie formant tablier 8, présente dans l'exemple illustré une section transversale en C, comme le montre les figures 2 et 3. La poutre 9 est pourvue d'un réseau de nervures 14. Dans l'exemple représenté, les nervures 14 sont disposées en croisillon.

La poutre transversale 9 a, comme fonction principale, d'assurer le support d'un profilé d'étanchéité 16 qui est mis en compression lorsque le capot 4 est en position fermée. Ce profilé d'étanchéité 16 empêche que des gaz de combustion ou des odeurs ne s'échappe du compartiment moteur et migrent vers l'ensemble d'auvent 1. L'ensemble d'auvent 1 constitue, en effet, le point d'aspiration d'air frais en direction de l'habitacle. C'est pour cela qu'il importe que l'étanchéité de l'ensemble d'auvent 1 soit sans défaut. Dans l'exemple illustré le profilé d'étanchéité 16 est chaussé sur une nervure 19 positionnée sur la poutre transversale 9. Ce profilé d'étanchéité pourrait être embarqué sur la face intérieure du capot 4.

A cette fin, la poutre transversale 9 assure un contre appui au profilé d'étanchéité 16 qui est écrasé par le capot 4, lorsqu'il est en position fermée. Le réseau de nervures 14 participe à la rigidification de la poutre 9 et au contre appui que fournit la poutre 9.

On peut remarquer qu'à chacune de ses extrémités, la poutre transversale 9 présente des ouvertures oblongues 17 qui permettent de fixer l'ensemble d'auvent 1 au niveau des ailes du véhicule.

Un point spécifique de l'ensemble d'auvent 1 selon l'invention est que le support 2 présente une bande transversale frangible 18.

Cette bande transversale frangible 18 est située à la jonction entre la poutre transversale 9 et la partie formant tablier 8. Plus spécifiquement, la bande transversale frangible 18 est dans le prolongement de la partie formant tablier 8 et est adjacente à la poutre transversale 9.

Dans la forme de réalisation montrée sur les figures, la bande transversale frangible 18 est constituée d'une série de pontets 20 alternant avec des fenêtres 21 dont la surface est obturée par une couche de matière plastique souple, par exemple, de type élastomère.

La figure 3, qui montre l'ensemble d'auvent 1 en coupe transversale au niveau d'un pontet 20 fait apparaître que ce dernier peut présenter une ligne de restriction de matière 22.

La figure 4, qui montre l'ensemble d'auvent 1 en coupe transversale au niveau d'une fenêtre 21 fait clairement apparaître que celle-ci est totalement obturée et assure donc une étanchéité au gaz, mais également assure une isolation acoustique. Le voile obturant la fenêtre 21 peut être obtenu par injection bi matière. Ce voile peut être injecté au cours de la même opération que celle qui prévoit l'injection du joint périphérique.

La grille d'auvent 3 qui vient en appui sur le support 2 est un élément qui peut être en matière plastique et qui présente une ou plusieurs zones généralement pourvues d'ouies par lesquelles de l'air frais peut alimenter l'habitacle.

Le comportement de l'ensemble d'auvent 1 est donc le suivant.

En fonctionnement habituel, l'ensemble d'auvent 1 assure ses fonctions d'étanchéification du compartiment moteur et de piquage d'air à la base du pare brise.

L'ensemble d'auvent 1 se distingue des ensembles d'auvent de l'art antérieur en cas de choc avec un piéton.

Dans ce cas d'un impact avec l'ensemble d'auvent 1 selon une direction sensiblement verticale symbolisé par une flèche sur les figure 3 et 4, la bande frangible 18 absorbe une partie de l'énergie de l'impact en se cassant au niveau d'au moins un pontet 20. La rupture d'au moins l'un des pontets 20 et généralement de plusieurs pontets 20 conduit à un affaissement de l'ensemble d'auvent 1.

Lorsqu'un piéton heurte le véhicule, l'impact est considérablement atténué par la rupture d'un ou plusieurs pontets 20.

Les fenêtres 21, qui sont pourvues d'un voile 23 de matière souple, ne s'opposent en aucune façon à ce mouvement d'affaissement.

En outre, lors d'un impact, les lumières oblongues 17 autorisent un glissement du support 2 dans le sens transversal, et donc ne s'opposent pas à l'affaissement de l'ensemble d'auvent 1. On peut ajouter que, pour ce qui est du degré de liberté transversal du support 2, il peut être envisagé de doter ce dernier de moyens de fixation éjectable qui permettent de larguer le support 2 au niveau de ses fixations latérales.

L'invention fournit ainsi un ensemble d'auvent qui se montre non agressif à l'égard d'un piéton qui entrerait en collision avec un véhicule.

Bien entendu, l'invention n'est pas limitée à la forme de réalisation qui vient d'être décrite, mais elle en embrasse au contraire toutes les formes de réalisation.

## Revendications

1. Ensemble d'auvent (1) pour un véhicule automobile ayant une partie moteur, protégée par un capot (4), et une partie d'habitacle protégée notamment par un pare-brise (7), l'ensemble d'auvent pouvant être positionné entre le bord transversal arrière du capot (4) et le bord transversal avant du pare-brise (7), l'ensemble d'auvent (1) comprenant une grille d'auvent (3) venant en appui contre un support (2) présentant une bande transversale frangible (18) pouvant se casser lors d'un impact excédant une force prédéterminée sur la grille d'auvent pour absorber une partie de l'énergie de l'impact,
**caractérisé en ce que** la bande transversale frangible (18) présente plusieurs pontets (20) alternant avec des fenêtres (21) obturées par un voile (23) de matière plastique souple.

2. Ensemble d'auvent (1) selon la revendication 1, **caractérisé en ce que** au moins l'un des pontets (20) présente une ligne de restriction de matière (22).

3. Ensemble d'auvent (1) selon l'une des revendications 1 à 2, **caractérisé en ce que** le support (2) présente une partie formant tablier (8) surmontée d'une poutre transversale (9) contre laquelle le capot vient lorsqu'il est en position fermée.

4. Ensemble d'auvent (1) selon la revendication 3, **caractérisé en ce que** la bande transversale frangible (18) s'étend transversalement de manière adjacente à la poutre transversale (9).

5. Ensemble d'auvent (1) selon la revendication 3 ou la revendication 4, **caractérisé en ce que** la poutre transversale (9) présente une section transversale en C.

6. Ensemble d'auvent (1) selon la revendication 5, **caractérisé en ce que** la poutre transversale (9) est pourvue d'un réseau de nervures orientées dans la direction d'appui du capot (4).

7. Ensemble d'auvent (1) selon l'une des revendications 3 à 6, **caractérisé en ce qu'**un profilé d'étanchéité (16) est interposé entre la poutre transversale (9) et le capot (4).

8. Ensemble d'auvent (1) selon la revendication 7, **caractérisé en ce que** la poutre transversale (9) présente une nervure sur laquelle est chaussé le profilé d'étanchéité (16).

9. Ensemble d'auvent (1) selon la revendication 7, **caractérisé en ce que** le capot (4) embarque sur sa face interne le profilé d'étanchéité (16).

10. Ensemble d'auvent (1) selon l'une des revendications 1 à 9, **caractérisé en ce que** le support (2) présente des moyens de fixation sur le véhicule à chacune de ses extrémités autorisant un degré de liberté dans une direction transversale.

11. Ensemble d'auvent (1) selon la revendication 10, **caractérisé en ce que** les moyens de fixation consistent en une lumière oblongue (17) pratiquée à chaque extrémité de la poutre transversale (9) dans laquelle peut être engagée un rivet ou un boulon.

12. Ensemble d'auvent (1) selon l'une des revendications 1 à 11, **caractérisé en ce que** le voile (23) de matière souple est obtenu par co moulage avec le support (2).

13. Ensemble d'auvent (1) selon la revendication 12, **caractérisé en ce que** un joint d'étanchéité (10) est co moulé avec le voile (23) de matière souple.

## Claims

1. A cowl box (1) for a motor vehicle having an engine part protected by a hood (4) and an interior part protected in particular by a windshield (7), the cowl box being capable of being positioned between the rear transverse edge of the hood (4) and the front transverse edge of the windshield (7), the cowl box (1) comprising a cowl grid (3) coming into abutment against a backing (2) having a frangible transverse strip (18) which can break in case of an impact exceeding a predetermined force on the cowl grid in order to absorb part of the impact energy,
**characterized in that** the frangible transverse strip (18) has several ridges (20) alternating with windows (21) sealed by a web (23) of flexible plastic material.

2. The cowl box (1) according to claim 1, **characterized in that** at least one of the ridges (20) has a material contraction (22).

3. The cowl box (1) according to any of claims 1 and 2, **characterized in that** the backing (2) has a plate part (8) topped by a cross-beam (9) on which the hood will rest when it is in the closed position thereof.

4. The cowl box (1) according to claim 3, **characterized in that** the frangible transverse strip (18) extends transversely adjacent to the cross-beam (9).

5. The cowl box (1) according to claim 3 or claim 4, **characterized in that** the cross-beam (9) has a C-shaped cross-section.

6. The cowl box (1) according to claim 5, **characterized in that** the cross-beam (9) is provided with an array of ribs oriented in the direction of abutment of the hood (4).

7. The cowl box (1) according to any of claims 3 to 6, **characterized in that** a sealing profile (16) is inserted between the cross-beam (9) and the hood (4).

8. The cowl box (1) according to claim 7, **characterized in that** the cross-beam (9) has a rib onto which the sealing profile (16) is fitted.

9. The cowl box (1) according to claim 7, **characterized in that** the hood (4) on the internal side thereof, carries along the sealing profile (16).

10. The cowl box (1) according to any of claims 1 to 9, **characterized in that** the backing (2) has means for fastening to the vehicle at each of the ends thereof, allowing for one degree of freedom in a transverse direction.

11. The cowl box (1) according to claim 10, **characterized in that** the fastening means are composed of an elongated lumen (17) made at each end of the transverse beam (9) into which a rivet or bold can be engaged.

12. The cowl box (1) according to any of claims 1 to 11, **characterized in that** the web (23) of flexible material is obtained by co-molding with the backing (2).

13. The cowl box (1) according to claim 12, **characterized in that** a seal (10) is co-molded with the web (23) of flexible material.

## Patentansprüche

1. Lufteinlasseinheit (1) für ein Kraftfahrzeug, das einen Motorteil, der durch eine Haube (4) geschützt ist, und einen Innenraumteil, der insbesondere durch eine Windschutzscheibe (7) geschützt ist, aufweist, wobei die Lufteinlasseinheit zwischen dem hinteren Querrand der Haube (4) und dem vorderen Querrand der Windschutzscheibe (7) positioniert werden kann, wobei die Lufteinlasseinheit (1) ein Lufteinlassgitter (3) umfasst, das an einer Unterlage (2) zur Anlage kommt, die einen zerbrechlichen Querstreifen (18) aufweist, der bei einem Aufprall, der eine vorherbestimmte Kraft auf das Lufteinlassgitter überschreitet, zerbrechen kann, um einen Teil der Aufprallenergie aufzunehmen,
**dadurch gekennzeichnet, dass** der zerbrechliche Querstreifen (18) mehrere Bügel (20) umfasst, die mit Fenstern (21) abwechseln, die mit einem Bahn (23) aus biegsamem Kunststoff verschlossen werden.

2. Lufteinlasseinheit (1) nach Anspruch 1, **dadurch gekennzeichnet, dass** mindestens einer der Bügel (20) eine Materialeinschnürung (22) aufweist.

3. Lufteinlasseinheit (1) nach einem der Ansprüche 1 und 2, **dadurch gekennzeichnet, dass** die Unterlage (2) einen Schürzenteil (8) umfasst, über dem eine Querstrebe (9) liegt, an der die Haube ankommt, wenn sie sich in der geschlossenen Position befindet.

4. Lufteinlasseinheit (1) nach Anspruch 3, **dadurch gekennzeichnet, dass** der zerbrechliche Querstreifen (18) sich quer neben der Querstrebe (9) liegend erstreckt.

5. Lufteinlasseinheit (1) nach Anspruch 3 oder 4, **dadurch gekennzeichnet, dass** die Querstrebe (9) einen C-förmigen Querschnitt aufweist.

6. Lufteinlasseinheit (1) nach Anspruch 5, **dadurch gekennzeichnet, dass** die Querstrebe (9) mit einem Raster aus Rippen versehen ist, die in die Auflagerichtung der Haube (4) gerichtet sind.

7. Lufteinlasseinheit (1) nach einem der Ansprüche 3 bis 6, **dadurch gekennzeichnet, dass** ein Abdichtprofil (16) zwischen der Querstrebe (9) und der Haube (4) eingeschaltet ist.

8. Lufteinlasseinheit (1) nach Anspruch 7, **dadurch gekennzeichnet, dass** die Querstrebe (9) eine Rippe aufweist, auf die das Abdichtprofil (16) aufgeschoben wird.

9. Lufteinlasseinheit (1) nach Anspruch 7, **dadurch gekennzeichnet, dass** die Haube (4) auf ihrer Innenseite das Abdichtprofil (16) mitnimmt.

10. Lufteinlasseinheit (1) nach einem der Ansprüche 1 bis 9, **dadurch gekennzeichnet, dass** die Unterlage an jedem ihrer Enden (2) Mittel zum Befestigen an dem Fahrzeug aufweist, die einen Freiheitsgrad in einer Querrichtung zulassen.

11. Lufteinlasseinheit (1) nach Anspruch 10, **dadurch gekennzeichnet, dass** die Befestigungsmittel aus einem länglichen Schlitz (17) bestehen, der an jedem Ende der Querstrebe (9) eingerichtet ist und mit dem ein Niet oder Bolzen in Eingriff gebracht werden kann.

12. Lufteinlasseinheit (1) nach einem der Ansprüche 1 bis 11, **dadurch gekennzeichnet, dass** die Bahn (23) aus biegsamem Material durch Mitgießen mit der Unterlage (2) gebildet wird.

13. Lufteinlasseinheit (1) nach Anspruch 12, **dadurch gekennzeichnet, dass** eine Dichtung (10) mit der Bahn (23) aus biegsamem Material mitgegossen wird.
